(19) **Europäisches Patentamt**
**European Patent Office**
**Office européen des brevets**

(11) **EP 1 775 501 B1**

(12) **EUROPEAN PATENT SPECIFICATION**

(45) Date of publication and mention
of the grant of the patent:
**23.07.2008 Bulletin 2008/30**

(51) Int Cl.:
**F16H 61/02** *(2006.01)*  **B60W 40/08** *(2006.01)*

(21) Application number: **06255225.2**

(22) Date of filing: **11.10.2006**

(54) **Driving advice system and driving advice method**

System und Verfahren zur Ausgabe von Fahrempfehlungen

Système et dispositif pour l'affichage d'information de conduite

(84) Designated Contracting States:
**DE FR IT**

(30) Priority: **12.10.2005 JP 2005297275**

(43) Date of publication of application:
**18.04.2007 Bulletin 2007/16**

(73) Proprietor: **Toyota Jidosha Kabushiki Kaisha**
**Toyota-shi, Aichi-ken, 471-8571 (JP)**

(72) Inventor: **Amano, Naoki**
**Toyota-shi**
**Aichi-ken 471-8571 (JP)**

(74) Representative: **Albutt, Anthony John et al**
**D Young & Co**
**120 Holborn**
**London EC1N 2DY (GB)**

(56) References cited:
**EP-A- 0 104 784        EP-A- 1 498 297**
**DE-A1- 4 006 653       JP-A- 11 311 332**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a driving advice system and a driving advice method which are used in a vehicle having a transmission with which operation of manual control of transmission is possible.

2. Description of the Related Art

In a vehicle such as an automobile or the like, with the aim, for example, of enhancing the fuel consumption according to a running state of the vehicle, it has been considered (for example, refer to Japanese Patent Application Publications Nos. JP-A-2004-60548 (EP-A-1,386,776), JP-A-2003-19912 (DE-10,120,713A) and JP-A-6-191312) to make it possible to order the driver to select a gear position of an appropriately constructed transmission.

For example, a display section may be provided on a combination meter of the vehicle for urging the driver to shift up or shift down the gear position of the transmission. With this system, shift change advice is provided by lighting up some display section according to the vehicle running state.

With a technique like the one described above, although a shift change advice is provided to the driver, it is not possible to recognize to what extent he has been able to drive in obedience to this shift change advice.

Due to this, from the point of view of the driver, it is difficult to put this shift change advice function into practical use, since the driver does not have the skill to know, if for example he has obeyed a shift change advice, what type of beneficial effect will be brought about by his driving in obedience to this shift change advice.

EP-1,498,297-A1 discloses an evaluation system and method for vehicle evaluation. The system determines whether an operation that worsens fuel economy has been performed, and based on operating conditions of the vehicle and the operating sate of an automatic control device displays excess fuel consumption on a display device.

SUMMARY OF THE INVENTION

The objective of the present invention is to provide a technique which can enable the driver to check an ratio which he has performed shift changing in obedience to a shift change advice.

According to a first aspect of the present invention, there is provided a driving advice system for a vehicle which includes a transmission capable of operation of manual control of the transmission, which gives a driver an advice to select a gear position of the transmission suitable for enhancement of fuel consumption according to a running state of the vehicle. This driving advice system includes driving evaluation means for calculating a ratio of shift changing by the driver according to the advice, and for displaying the calculated ratio on a display section.

According to this first aspect of the present invention, it becomes possible for the driver to ascertain the degree to which he performed driving of the vehicle in obedience to the shift change advice, by confirming the ratio which is being displayed on the display section. By checking this, if the driver calculates the fuel consumption of the vehicle, it becomes possible for him to correlate the ratio of his performance of shift changing in obedience to the advice, with the fuel consumption. Thus, if the result is that the fuel consumption is enhanced when this ratio is high, then, along with the driver being able really to feel that the advice was adequate and moreover has been effective, it also becomes possible for him to experience an interest in performing driving according to the advice.

It should be understood that it would also be acceptable to set up a system in which the display of the ratio on the display section is provided for only a predetermined time period, or one in which it is continued until the ignition key is turned OFF. If, hypothetically, the display is provided for only a predetermined time period, then it can be recognized for a short time by the driver, and thereafter it disappears in order not to become a distraction to his vision. On the other hand, if the display is provided at all times, then this is beneficial because the driver is able to apprehend the ratio at any time he desires to do so.

It would also be acceptable to arrange for the driving advice system described above to further include update request means for outputting a update request for updating the ratio displayed on the display section when the update request means is operated by a passenger of the vehicle, and wherein the driving evaluation means calculates the ratio at a requesting time point in response to the update request, and displays the calculated ratio on the display section.

Since, with this structure, it is arranged to update the display of the ratio displayed on the display section when an update request has been received due to operation by a passenger of the vehicle, accordingly it is possible to eliminate processing and the like for updating the display when no update request has been dispatched, so that such wasteful operation is avoided.

It would also be acceptable to arrange for this update request means to be a reset switch of a trip meter which is disposed on a meter panel of the vehicle, and for the reset switch to output the update request.

Since, with this structure, it is arranged to perform the processing for updating the display along with actuation of the reset switch of the trip meter, which is often done during refilling of the vehicle with fuel, accordingly it becomes unnecessary for the driver to perform any special action in order to execute such processing.

It would also be acceptable to arrange for the driving advice system described above to further include a dedicated switch that outputs the update request when the dedicated switch is operated by a passenger of the vehicle.

Since, with this structure, it is arranged to display the last ratio on the display section only when the driver feels a necessity to do so, accordingly useless operation is eliminated.

It would also be acceptable to arrange for the driving advice system described above to further include update request means for outputting an update request for updating the ratio displayed on the display section repeatedly at a predetermined interval, and wherein the driving evaluation means calculates the ratio at the requesting time point in response to the update request, and displays the calculated ratio on the display section.

Since, with this structure, it is arranged to perform updating of the display to the last data of the ratio automatically at an appropriate timing, accordingly, along with it becoming unnecessary for the driver to perform any special action in order to execute such processing for updating the display, also it becomes possible for the driver to recognize the ratio at a favorable timing.

It would also be acceptable to arrange for the update request means to accumulate a running distance of the vehicle from a time point at which the ratio is displayed at a previous time, and to output the update request when the accumulated running distance reaches a predetermined value.

With this structure, and with the condition for executing the processing for updating the display being specified as above, according to this specification, it becomes possible to perform the processing at a favorable timing.

It would also be acceptable to arrange for the update request means to count a number of the advice from the time point at which the ratio is displayed at a previous time, and to output the update request when the counted number reaches a predetermined value.

With this structure, and with the condition for executing the processing for updating the display being specified as above, according to this specification, it becomes possible to perform the processing at a favorable timing.

It would also be acceptable to arrange for the driving advice system described above to further include fuel consumption calculation means for calculating the fuel consumption during a predetermined period, and the driving evaluation means displays the calculated fuel consumption along with the ratio.

According to this structure, it becomes possible for the driver of the vehicle to correlate the ratio which he has obeyed the advice with the fuel consumption in a simple and easy manner at a glance, and thereby it becomes possible for the driver to recognize the effectiveness of the driving advice system.

It would also be acceptable to arrange for the driving advice system described above to further include storage means for storing the ratio each time the ratio is displayed on the display section.

According to this structure, by extracting the ratio which is accumulated in the storage means, it is possible for the driver to ascertain his past history of driving evaluation.

According to a second aspect of the present invention, there is provided a driving advice method for a vehicle which comprises a transmission capable of operation of manual control of the transmission, in which a driver is given an advice to select a gear position of the transmission suitable for enhancement of fuel consumption according to a running state of the vehicle. This driving advice method includes: the step of calculating a ratio of shift changing by the driver according to the advice; and the step of displaying the calculated ratio on a display section.

According to the present invention, it is possible for the driver to confirm the ratio of his performance of shift changing according to the advice for gear position selection. Due to this, it is possible to make a contribution to the enhancement of the value in use of this driving advance system, with the aim of improvement of the fuel consumption of the vehicle.

BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:

Fig. 1 is a schematic structural diagram showing a driving advice system according to a first embodiment of the present invention;
Fig. 2 is an enlarged elevation view showing an combination meter of Fig. 1;
Fig. 3 is a schematic structural diagram of a control device of Fig. 1;
Fig. 4a shows an example of a display during upshifting, and Fig. 4b shows an example of a display during downshifting;

Fig. 5 is a flow chart for explanation of driving evaluation control by the driving advice system of Fig. 1;

Fig. 6 is a flow chart showing an example of the details of processing in a step S1 of Fig. 5;

Fig. 7 is an example of display of ratio data by the driving evaluation control with the driving advice system of Fig. 1, and is a figure showing a portion of Fig. 2 in magnified view; and

Fig. 8 is a graph showing an example of display of evaluation history by the driving advice system of Fig. 1.

## DETAILED DESCRIPTION OF EMBODIMENTS

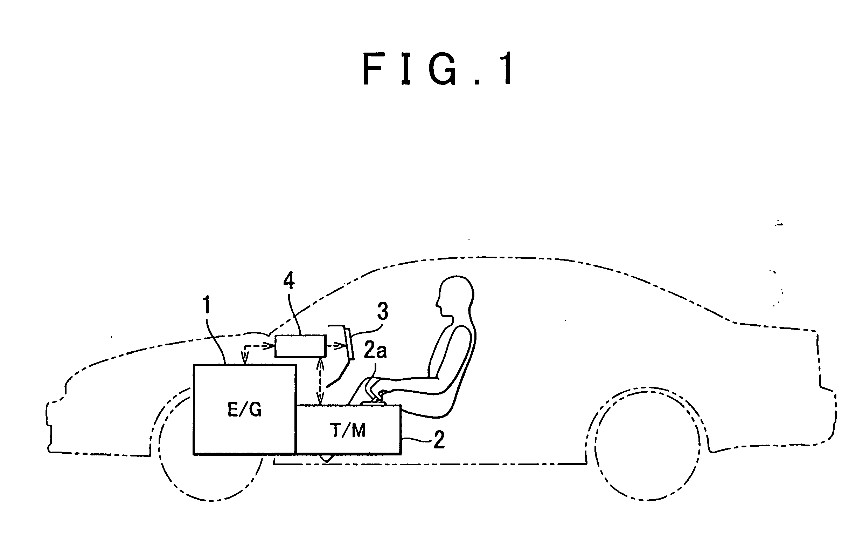

In the following, a first embodiment of the present invention will be explained with reference to Figs. 1 through 7.

In this embodiment, an automobile equipped with a manual transmission is given as an example. As shown in Fig. 1, this automobile comprises an internal combustion engine 1, a manual transmission 2, a combination meter 3, and a control device 4.

The manual transmission 2 may be, for example, one which has shift transmission gears for five speed stages, and a shift knob 2a for performing shift change operation manually is disposed so as to project within the passenger compartment.

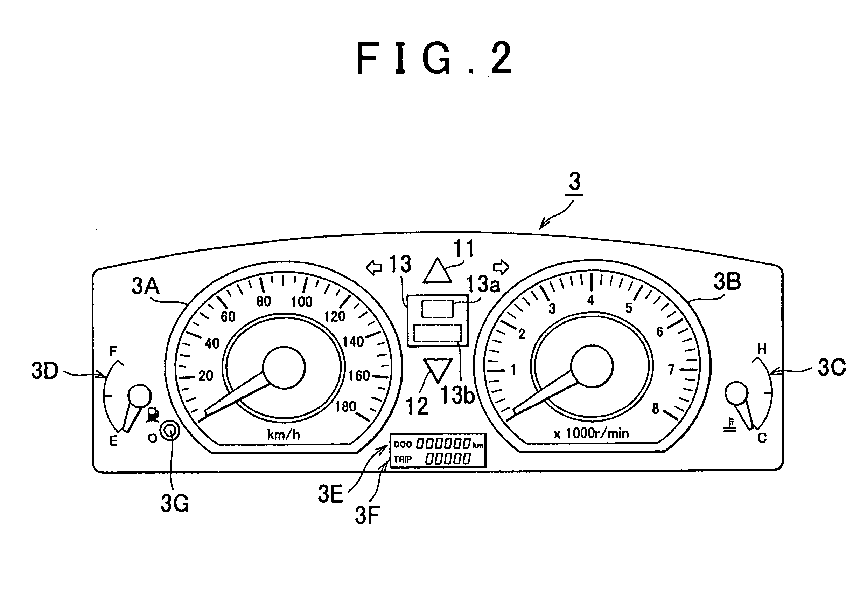

The combination meter 3 is disposed on a dashboard within the vehicle passenger compartment in front of the driving seat, and on this combination meter 3 there are disposed, as for example shown in Fig. 2, a speed meter 3A, a tachometer 3B, a water temperature gauge 3C, a fuel gauge 3D, an odometer 3E, a trip meter 3F and so on, and warning indicator lamps of various types and the like.

In this embodiment, this automobile is provided with a driving advice system which gives the driver an advice to select a suitable gear position of the manual transmission 2 according to the running state of the automobile, with the aim of enhancing the fuel consumption; and this will now be explained in detail in the following.

First, on the combination meter 3 there are provided: as a display section for shift change advice, a shift up lamp 11 and a shift down lamp 12 for the gear position of the transmission 2; as a display section for driving evaluation, a display 13 which consists of a liquid crystal display or a seven segment type display on which information such as various types of numerals, characters and the like is displayed; and the like.

It should be understood that these lamps 11 and 12 may, for example, be constituted by LEDs or the like, which it is arranged to light up according to requirements; or, alternatively, they may be arranged to blink; or it might be arranged for these lamps 11 and 12 to convey meaning according to the color of the light which they emit, by embedding in them light emitting material which emits a single color, or two or more types of color. Furthermore, instead of these lamps 11 and 12, it would also be possible to use a sound or a voice or the like for advising speed changing.

Furthermore, on the display 13, there are provided a gear position display region 13a on which is displayed, for example, a numeral or a symbol or the like which indicates the current gear position of the transmission 2, and a driving evaluation display region 13b on which is displayed a numeral or a symbol or the like which indicates a ratio of obedience to a shift change advice. It should be understood that these regions 13a and 13b may also be provided separately, as independent displays.

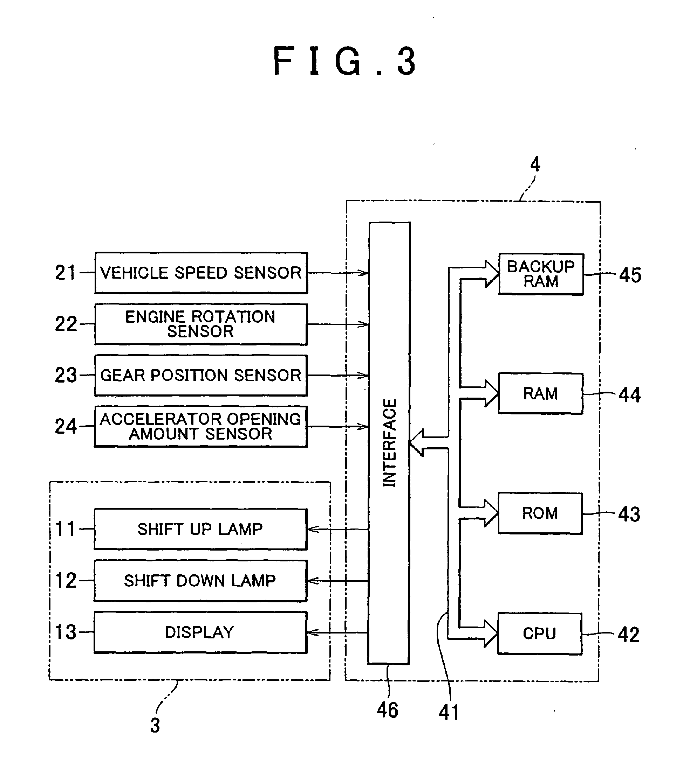

The control device 4 is founded on a per se known ECU (Electronic Control Unit), and comprises a CPU 42, a ROM 43, a RAM 44, a backup RAM 45, an interface 46, and the like, which are all mutually connected together by a bidirectional bus 41, as shown for example in Fig. 3.

It should be understood that this CPU 42 ascertains the running state of the vehicle based on the output signals from various types of sensor (for example, a vehicle speed sensor 21, an engine rotation sensor 22, a gear position sensor 23, an accelerator opening amount sensor 24, and so on) which are inputted via the interface 46, and performs appropriate control procedures, according to requirements.

Furthermore, apart from various types of program being stored in the ROM 43 for performing control procedures related to fundamental operation of the automobile, there are also stored, at least, a program for performing shift change advice control for giving the driver an advice to select a suitable gear position of the manual transmission 2 according to the running state of the vehicle, with the aim of enhancement of the fuel economy, a program for performing driving evaluation control related to calculating a ratio of obedience to a shift change advice and displaying the result of this calculation and so on, and the like.

Furthermore, the RAM 44 is a memory in which the results of calculation by the CPU 42 and the data which is inputted from the various sensors are temporarily stored, while the backup RAM 45 is a non-volatile memory in which are stored various types of data which must be stored.

The driving advice system comprises: this shift up lamp 11 and shift down lamp 12, which constitute a display section for shift change advices; the display 13, which constitutes a display section for driving evaluation; and shift change advice control and driving evaluation control by the control device 4.

Next, the operation of the driving advice system described above will be explained. The control device 4 recognizes the gear position of the manual transmission 2 which is currently selected, based on the detection signal from the gear position sensor 23, and displays the number of the corresponding gear position in the gear position display region 13a of the display 13.

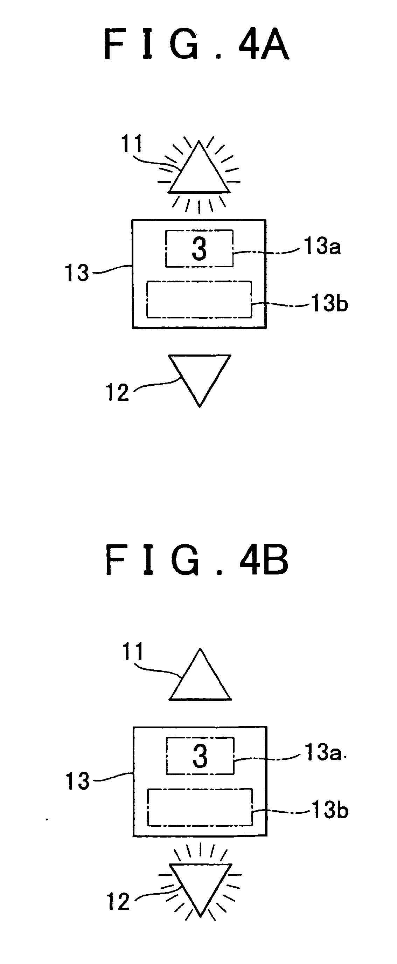

And, in the shift change advice control by the control device 4, the running state of the automobile is ascertained based on the signals which are outputted from the vehicle speed sensor 21, the engine rotation sensor 22, and the accelerator opening amount sensor 24. And, in order to perform the most suitable type of running from the point of view of enhancement of the fuel consumption, it is decided whether it is desirable to maintain the gear position which is selected by the manual transmission 2 at the present time point, or whether it is desirable to perform a shift up, or whether it is desirable to perform a shift down. And, if it is desirable to maintain the present state of the gear position, then both the shift up lamp 11 and the shift down lamp 12 are not lit up; while on the other hand, if it is desirable to change the gear position, then the shift up lamp 11 is lit up, as shown for example in Fig. 4a, or the shift down lamp 12 is lit up, as shown for example in Fig. 4b, so that the driver is informed that it is necessary to perform shift change operation.

It should be understood that, in consideration of the goal of enhancing the fuel consumption, if for example the vehicle is running at a constant speed, it is desirable to operate the vehicle in as high a speed stage as possible, so that the engine rotational speed attains a level in which the fuel consumption becomes a minimum. The shift change advice control described above is regulated based on the above aspect.

After having started this type of shift change advice control, in the first embodiment of the present invention, it is arranged to perform driving evaluation control in order to calculate a ratio of obedience to a shift change advice, for example, to a number of the advices given by the driving advice system at an appropriate timing, and in order to display this ratio data which has been calculated in an appropriate manner on the driving evaluation display region 13b of the display 13.

In particular, in this embodiment, it is arranged to perform the calculation and display processing of the driving evaluation control when, from the time point that the vehicle has started running, it has run over a predetermined distance (for example 50 km or 100 km or the like). Of course, it may be arranged for the driver to be able to change the numerical value of this running distance at will.

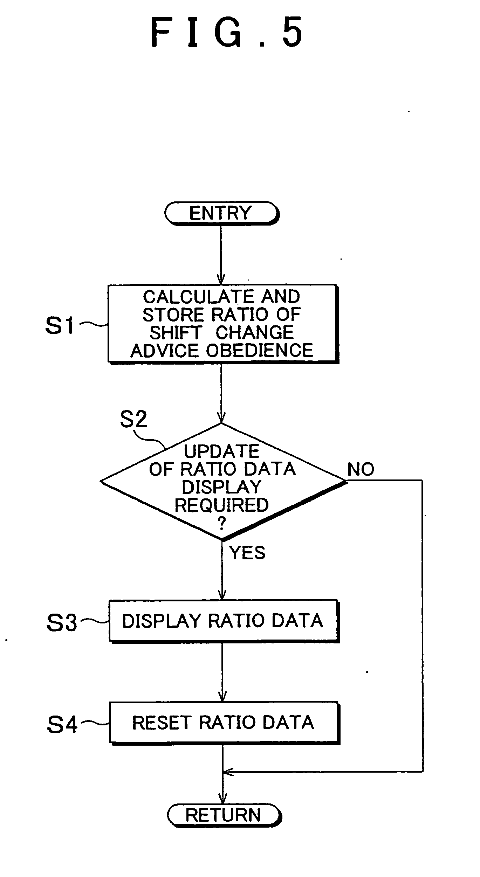

This driving evaluation control will now be explained in detail in concrete terms, with reference to Fig. 5. The flow chart shown in this Fig. 5 is entered on a predetermined time cycle.

First, in a step S1, along with calculating a ratio of obedience to a shift change advice, the value thereof which has been calculated is store in, for example, the backup RAM 45 or the like. The contents of the processing in this step S 1 will be explained in greater detail hereinafter.

After this, in a step S2, a decision is made as to whether or not it is necessary to perform updating of the display of the ratio data. This decision may be performed by considering, for example, whether or not the running distance from the time point at which the engine was started has arrived at some fixed value which is set in advance. Here, if the running distance has not arrived at the fixed value, then a negative decision is made, since it is not necessary to perform updating of the display of the ratio data, and the following steps S3 and S4 are skipped and the flow of control exits this flow chart. However, if the running distance has arrived at the fixed value, then an affirmative decision is made, since it is now necessary to perform updating of the display of the ratio data, and the flow of control proceeds to the next step S3. This step S2 may be considered as being a means for requesting updating.

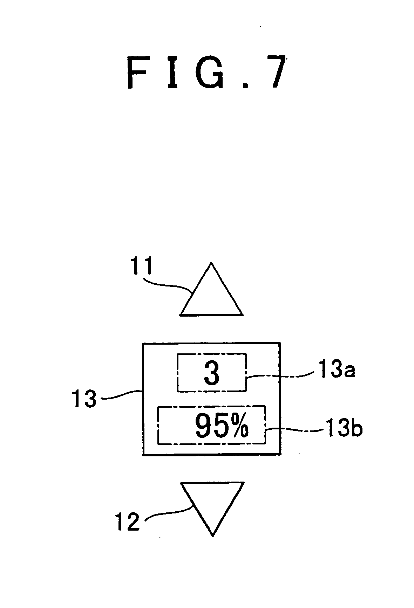

In this step S3, along with reading out the ratio data which has been stored in the backup RAM 45 in the above described step S1, the numerical value of this ratio data which has thus been read out is displayed, for example in the driving evaluation display region 13b of the display 13 as shown in Fig. 7, and then, in the next step S4, a reset is performed so as to delete the ratio data which is stored in the backup RAM 45, and the flow of control exits this flow chart.

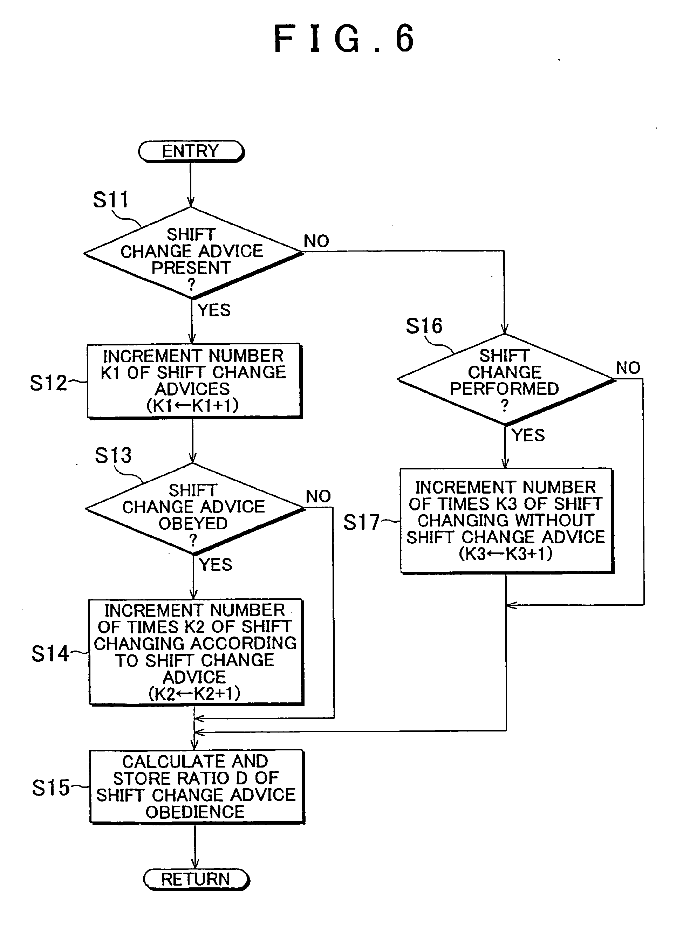

Next, the details of the processing in the step S1 described above will be explained in detail with reference to Fig. 6. First, in a step S11, a decision is made as to whether or not a shift change advice has been issued.

First, the case will be explained in which a shift change advice has been issued, in other words in which an affirmative decision has been made in the step S11 described above.

That is, after having incremented a counter which counts the number K1 of the shift change advice in the next step S12, a decision is made in a step S 13 as to whether or not the shift change advice has been obeyed. The decision in this step S 13 may be performed by considering whether, during the interval up until a predetermined time period has elapsed from when the shift change advice was issued, the gear position which was advised by the shift change advice and the actual gear position agree with one another or not.

If an affirmative decision has been reached in the step S 13 described above, in other words if the shift change advice has been obeyed, then in the next step S14 a counter which counts the number of times K2 that shift change has been performed in obedience to a shift change advice is incremented. And, in the next step S 15, a ratio D of the obedience by the driver to the shift change advice is calculated according to an equation (1) which will be described hereinafter, and the value obtained as a result of this calculation is stored in the backup RAM 45. However, if a negative decision has been reached in the step S 13 described above, in other words if the shift change advice has not been obeyed, then the above described step S14 is skipped, and the flow of control is transferred directly to the step S 15 described above.

Now the case will be explained in which a negative decision has been reached in the step S11 described above, in other words in the case that no shift change advice has been issued. In a step S16, a decision is made as to whether a shift change has been performed. This decision may be performed by considering whether or not the gear position which has been recognized from the output of the gear position sensor 23 is different from the previous gear position before this gear position was established.

Next, if an affirmative decision has been made in the step S16 described above, in other words if a shift change has occurred, then, after having incremented in a step S 17 a counter which counts the number of times K3 that a shift change has been performed in the absence of a shift change advice, since there has been no shift change advice, the flow of control proceeds to the step S 15 described above. However, if a negative decision has been made in the step S16 described above, in other words if no shift change has occurred, then the step S 17 described above is skipped, and the flow of control proceeds to the step S 15 described above.

$$D\,(\%) = \{\,K2 \div (K1 + K3)\,\} \times 100 \,.... \quad (1)$$

As has been explained above, with the embodiment described above, when a shift change advice has been issued with the aim of enhancement of the fuel consumption, it is arranged to display data relating to the ratio of the obedience by the driver to this shift change advice on the display 13.

By doing this, it becomes possible for the driver to confirm by visual inspection to what degree he has been able to drive in obedience to the shift change advices. And, if the driver calculates the fuel consumption in accordance with this, it becomes possible for him to correlate the ratio of his obedience to the shift change advices and the fuel consumption. If at this time the result is that, when this ratio has become high, the fuel consumption has also been enhanced, then, along with the driver being able really to feel that the shift change advices have been adequate and moreover effective, it also becomes possible for him to feel an interest in performing driving according to the shift change advices.

In the following, other embodiments of the present invention will be explained.

(1) In the first embodiment described above, an example was cited in which this driving advice system was applied to an automobile which was equipped with a manual transmission 2, but it would also be possible to apply the driving advice system according to the first embodiment of the present invention to, for example, a vehicle which is equipped with an automatic transmission which has a manual shift transmission function.

Such an automatic transmission having a manual shift transmission function is one which is per se generally well known, and may be of the kind sometimes termed the sequential shift type, in which shifting up and shifting down are performed by, respectively, forward pressing operation and rearward pressing operation.

(2) In the embodiment described above, an example was cited in which, on the combination meter 3, there the lamps 11 and 12 were provided as a display section for shift change advices, and the display 13 was provided as a display section for driving evaluation; but the position in which these sections are provided in that embodiment are not to be considered as being limitative of the present invention.

This display 13 and lamps 11 and 12 might be arranged, for example, not within the combination meter 3, but rather in its neighborhood or the like. Moreover, they might also be displayed using a per se known navigation system, or using a head up display system which projects information on the front windscreen of the vehicle.

Although, in the first embodiment of the present invention described above, the running distance was used as a criterion for updating the ratio data displayed on the display 13, it would also be acceptable, for example, to utilize the value K1, i.e. the number of times that a shift change advice has been issued.

In other words, it would be acceptable to arrange to count the number of times K1 that a shift change advice has been issued from the time point of starting the engine, to calculate the ratio data when this counted value arrives at some predetermined value, and then to update the display 13 of this ratio data.

(4) In the first embodiment of the present invention described above or the above described variation (3) thereof, it was arranged to perform the display update process for the ratio data displayed on the display 13 automatically, but it would also be acceptable, for example, to arrange for this to be performed only when a human operation has been received.

For example, it would be acceptable to provide a dedicated switch for updating the display. Furthermore, it would also be acceptable to arrange to perform the display update process by utilizing the output signal of an appropriate switch which is already provided on the combination meter 3. In this case, it would be possible to take advantage of a reset switch 3G for the trip meter 3E, such as one which is generally readily available on such a combination meter 3. In the first place, the operation of such a reset switch 3G of the trip meter 3E is often performed during refilling with fuel, and it also often happens that, at this time, the driver performs calculation of the fuel consumption of the vehicle. Due to this, if it is arranged to perform the display update process for the ratio data which is displayed on the driving evaluation display region 13b along with actuation of the reset switch 3G as described above, then it becomes unnecessary for the driver to perform separate actuation only for performing the display update process. Moreover it becomes possible for the driver, incidentally to the calculation of the fuel consumption, also to correlate the fuel consumption with the ratio data as to how well he has obeyed the shift change advices. If, at this time, the result is that the fuel consumption is enhanced when the ratio which the driver has obeyed the shift change advices has improved, then the driver is able really to feel that the driving advice function is adequate and moreover has been effective. Furthermore, he comes to feel a genuine interest in performing driving while obeying the shift change advices.

In the first embodiment described above, the control device 4 may calculate the fuel consumption at predetermined intervals, and may display this fuel consumption data which has thus been calculated on the display 13 together with the ratio data. It should be understood that, while the period for calculating the fuel consumption may be any desired period, it may also be, for example, from the time point at which the engine is started to when the ratio data is displayed, or it may be the time period from the time point of display of the ratio data the previous time to when the display is updated to show the last ratio data. It should be understood that, for this calculation of the fuel consumption, this is performed by determining the vehicle running distance and the amount of fuel consumed during the predetermined time interval, and by dividing the running distance by the fuel consumption amount.

In this case, after having displayed the ratio data as to how well the driver has obeyed the shift change advices and the fuel consumption data together on the single display 13, it becomes simple and easy to correlate them at a glance. Due to this, it becomes possible for the driver to recognize the effectiveness of this driving advice system.

(6) In the first embodiment described above, each time the ratio data is displayed in the driving evaluation display region 13b of the display 13 which is the display section for driving evaluation, it would also be acceptable to arrange for the control device 4 to store, for example, this display of ratio data in the backup RAM 45 as evaluation history, along with the date and time.

It would be possible to arrange for this evaluation history to be read out when required by using an auto diagnosis program (a diagnosis function or the like) which is stored, for example, in the ROM 43. By doing this it would become possible, by extracting this evaluation history, to ascertain the driving conditions in the past.

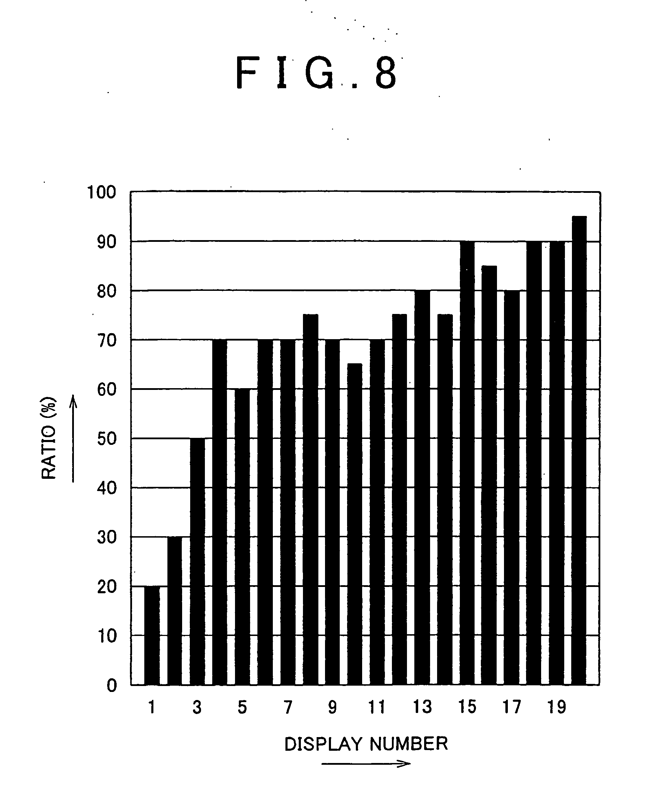

As for the display format for such an evaluation history, it could simply be a numerical enumeration, or it could also be some appropriate graphical display, such as the graph shown by way of example in Fig. 8. If, tentatively, the evaluation history is displayed as a graph like the one shown in Fig. 8, then it becomes easy for the driver to recognize it by visual inspection.

## Claims

1.  A driving advice system for a vehicle which comprises a transmission (2) capable of operation of manual control of the transmission (2), which gives a driver an advice to select a gear position of the transmission (2) suitable for enhancement of fuel consumption according to a running state of the vehicle, the driving advice system comprising driving evaluation means (4) for calculating a ratio of shift changing by the driver according to the advice, and for displaying the calculated ratio on a display (13).

2.  The driving advice system according to claim 1, further comprising:

    update request means for outputting a update request for updating the ratio displayed on the display (13) when the update request means is operated by a passenger of the vehicle, and wherein
    the driving evaluation means (4) calculates the ratio at a requesting time point in response to the update request, and displays the calculated ratio on the display section (13).

3.  The driving advice system according to claim 2, wherein

    the update request means includes a reset switch (3G) of a trip meter (3F) that is disposed on a meter panel (3) of the vehicle, and the reset switch (3G) outputs the update request.

4.  The driving advice system according to claim 2, wherein

    the update request means includes a dedicated switch that outputs the update request when the dedicated switch is operated by the passenger of the vehicle.

5.  The driving advice system according to claim 1, further comprising:

    the update request means for outputting an update request for updating the ratio displayed on the display (13) repeatedly at a predetermined interval; and wherein,
the driving evaluation means (4) calculates the ratio at a requesting time point in response to the update request, and displays the calculated ratio on the display (13).

6. The driving advice system according to claim 5, wherein

the update request means accumulates a running distance of the vehicle from a time point at which the ratio is displayed at a previous time, and outputs the update request when the accumulated running distance reaches a predetermined value.

7. The driving advice system according to claim 5, wherein

the update request means counts a number of the advice from a time point at which the ratio is displayed at a previous time, and outputs the update request when the counted number reaches a predetermined value.

8. The driving advice system according to any one of claims 1 to 7, further comprising:

fuel consumption calculation means for calculating the fuel consumption during a predetermined period, and wherein
the driving evaluation means (4) displays the calculated fuel consumption along with the ratio.

9. The driving advice system according to any one of claims 1 to 8, further comprising:

storage means (45) for storing the ratio each time the ratio is displayed on the display (13).

10. A driving advice method for a vehicle which comprises a transmission (2) capable of operation of manual control of the transmission (2), in which a driver is given an advice to select a gear position of the transmission (2) suitable for enhancement of fuel consumption according to a running state of the vehicle, the method comprising:

calculating an ratio of shift changing by the driver according to the advice; and
displaying the calculated ratio.

**Patentansprüche**

1. Fahrempfehlungssystem für ein Fahrzeug, das ein Getriebe (2) aufweist, welches im Stande ist, eine manuelle Steuerung des Getriebes (2) vorzunehmen, das dem Fahrer eine Empfehlung ausgibt, eine Gangposition des Getriebes auszuwählen, die geeignet ist, den Treibstoffverbrauch gemäß einem Fahrzustand des Fahrzeugs zu verbessern, wobei das Fahrempfehlungssystem eine Fahrbewertungseinrichtung (4) zum Berechnen eines Verhältnisses eines Gangwechselns durch den Fahrer gemäß der Empfehlung und zum Anzeigen des berechneten Verhältnisses auf einer Anzeige (13) aufweist.

2. Fahrempfehlungssystem gemäß Anspruch 1, weiterhin mit:

einer Aktualisierungsanforderungseinrichtung zum Ausgeben einer Aktualisierungsanforderung zum Aktualisieren des auf der Anzeige (13) angezeigten Verhältnisses, wenn die Aktualisierungsanforderungseinrichtung von einem Fahrzeuginsassen betätigt wird, und wobei
die Fahrbewertungseinrichtung (4) das Verhältnis zu einem Anforderungszeitpunkt als Reaktion auf die Aktualisierungsanforderung berechnet und das berechnete Verhältnis auf dem Anzeigeabschnitt (13) anzeigt.

3. Fahrempfehlungssystem gemäß Anspruch 2, wobei

die Aktualisierungsanforderungseinrichtung einen Zurückstellschalter (3G) eines Distanzzählers (3F) umfasst, der an einem Armaturenbrett (3) des Fahrzeugs angebracht ist, und der Zurückstellschalter (3G) die Aktualisierungsanforderung ausgibt.

4. Fahrempfehlungssystem gemäß Anspruch 2, wobei

die Aktualisierungsanforderungseinrichtung einen bestimmten Schalter umfasst, der die Aktualisierungsanforderung ausgibt, wenn der bestimmte Schalter durch den Fahrzeuginsassen betätigt wird.

5. Fahrempfehlungssystem gemäß Anspruch 1, weiterhin mit:

der Aktualisierungsanforderungseinrichtung zum wiederholten Ausgeben einer Aktualisierungsanforderung zum Aktualisieren des auf der Anzeige (13) angezeigten Verhältnisses bei einem vorbestimmten Intervall; und wobei
die Fahrbewertungseinrichtung (4) das Verhältnis zu einem Anforderungszeitpunkt als Reaktion auf die Aktualisierungsanforderung berechnet und das berechnete Verhältnis auf dem Anzeigeabschnitt (13) anzeigt.

6. Fahrempfehlungssystem gemäß Anspruch 5, wobei

die Aktualisierungsanforderungseinrichtung eine Fahrdistanz des Fahrzeugs von einem Zeitpunkt an, zu dem das Verhältnis ein vorhergehendes Mal angezeigt wurde, aufaddiert, und die Aktualisierungsanforderung ausgibt, wenn die aufaddierte Fahrdistanz einen vorbestimmten Wert erreicht.

7. Fahrempfehlungssystem gemäß Anspruch 5, wobei

die Aktualisierungsanforderungseinrichtung eine Anzahl der Empfehlungen von einem Zeitpunkt an, zu dem das Verhältnis ein vorhergehendes Mal angezeigt wurde, zählt, und die Aktualisierungsanforderung ausgibt, wenn die gezählte Anzahl einen vorbestimmten Wert erreicht.

8. Fahrempfehlungssystem gemäß einem der Ansprüche 1 bis 7, weiterhin mit:

einer Treibstoffverbrauchberechnungseinrichtung zum Berechnen des Treibstoffverbrauchs während einer vorbestimmten Periode, und wobei
die Fahrbewertungseinrichtung (4) den berechneten Treibstoffverbrauch zusammen mit dem Verhältnis anzeigt.

9. Fahrempfehlungssystem gemäß einem der Ansprüche 1 bis 8, weiterhin mit:

einer Speichereinrichtung (45) zum Speichern des Verhältnisses jedes Mal dann, wenn das Verhältnis auf der Anzeige (13) angezeigt wird.

10. Fahrempfehlungsverfahren für ein Fahrzeug, das ein Getriebe (2) aufweist, das im Stande ist, eine manuelle Steuerung des Getriebes (2) vorzunehmen, bei dem einem Fahrer eine Empfehlung gegeben wird, eine Gangposition des Getriebes auszuwählen, die geeignet ist, den Treibstoffverbrauch gemäß einem Fahrzustand des Fahrzeugs zu verbessern, wobei das Verfahren aufweist:

Berechnen eines Verhältnisses eines Gangwechselns durch den Fahrer gemäß der Empfehlung; und
Anzeigen des berechneten Verhältnisses.

**Revendications**

1. Système de conseil de conduite pour un véhicule qui comprend une transmission (2) capable d'effectuer une opération de commande manuelle de la transmission (2), qui donne à un conducteur un conseil pour sélectionner une position de vitesse de la transmission (2) appropriée pour améliorer la consommation de carburant en fonction d'un état de marche du véhicule, le système de conseil de conduite comprenant des moyens d'évaluation de conduite (4) pour calculer un rapport de changement de vitesse par le conducteur conformément au conseil, et pour afficher le rapport calculé sur un afficheur (13).

2. Système de conseil de conduite selon la revendication 1, comprenant en outre :

des moyens de demande de mise à jour pour délivrer une demande de mise à jour pour mettre à jour le rapport affiché sur l'afficheur (13) lorsque les moyens de demande de mise à jour sont actionnés par un passager du véhicule, et dans lequel
les moyens d'évaluation de conduite (4) calculent le rapport à un instant de demande en réponse à la demande de mise à jour, et affichent le rapport calculé sur la section d'affichage (13).

3. Système de conseil de conduite selon la revendication 2, dans lequel

les moyens de demande de mise à jour comprennent un commutateur de réinitialisation (3G) d'un compteur partiel (3F) qui est disposé sur un tableau de bord (3) du véhicule, et le commutateur de réinitialisation (3G) délivre la demande de mise à jour.

4. Système de conseil de conduite selon la revendication 2, dans lequel

les moyens de demande de mise à jour comprennent un commutateur dédié qui délivre la demande de mise à jour lorsque le commutateur dédié est actionné par le passager du véhicule.

5. Système de conseil de conduite selon la revendication 1, comprenant en outre :

les moyens de demande de mise à jour pour délivrer une demande de mise à jour pour mettre à jour le rapport affiché sur l'afficheur (13) de manière répétée à un intervalle prédéterminé ; et dans lequel, les moyens d'évaluation de conduite (4) calculent le rapport à un instant de demande en réponse à la demande de mise à jour, et affichent le rapport calculé sur l'afficheur (13).

6. Système de conseil de conduite selon la revendication 5, dans lequel

les moyens de demande de mise à jour accumulent une distance de déplacement du véhicule à partir d'un instant auquel le rapport est affiché à un instant précédent, et délivrent la demande de mise à jour lorsque la distance de déplacement accumulée atteint une valeur prédéterminée.

7. Système de conseil de conduite selon la revendication 5, dans lequel

les moyens de demande de mise à jour comptent un nombre de conseils à partir d'un instant auquel le rapport est affiché à un instant précédent, et délivrent la demande de mise à jour lorsque le nombre compté atteint une valeur prédéterminée.

8. Système de conseil de conduite selon l'une quelconque des revendications 1 à 7, comprenant en outre:

des moyens de calcul de consommation de carburant pour calculer la consommation de carburant pendant une période prédéterminée, et dans lequel les moyens d'évaluation de conduite (4) affichent la consommation de carburant calculée ainsi que le rapport.

9. Système de conseil de conduite selon l'une quelconque des revendications 1 à 8, comprenant en outre:

des moyens de mémorisation (45) pour mémoriser le rapport à chaque fois que le rapport est affiché sur l'afficheur (13).

10. Procédé de conseil de conduite pour un véhicule qui comprend une transmission (2) capable d'effectuer une opération de commande manuelle de la transmission (2), dans lequel un conducteur reçoit un conseil pour sélectionner une position de vitesse de la transmission (2) appropriée pour améliorer la consommation de carburant en fonction d'un état de marche du véhicule, le procédé comprenant les étapes consistant à :

calculer un rapport de changement de vitesse par le conducteur conformément au conseil ; et afficher le rapport calculé.

# FIG.1

EP 1 775 501 B1

# FIG.2

EP 1 775 501 B1

EP 1 775 501 B1

# F I G . 3

21 — VEHICLE SPEED SENSOR

22 — ENGINE ROTATION SENSOR

23 — GEAR POSITION SENSOR

24 — ACCELERATOR OPENING AMOUNT SENSOR

11 — SHIFT UP LAMP

12 — SHIFT DOWN LAMP

13 — DISPLAY

3

INTERFACE

4

BACKUP RAM — 45

RAM — 44

ROM — 43

CPU — 42

46   41

13

# F I G . 4A

# F I G . 4B

# F I G . 5

```
        ( ENTRY )
            │
            ▼
      ┌──────────────┐
      │ CALCULATE AND│
   S1 │STORE RATIO OF│
      │ SHIFT  CHANGE│
      │ADVICE OBEDIENCE│
      └──────────────┘
            │
   S2       ▼
        ╱UPDATE ╲
      ╱OF RATIO DATA╲    NO
      ╲ DISPLAY   ╱─────────┐
        ╲REQUIRED╱          │
            │ YES           │
            ▼               │
   S3 ┌──────────────┐      │
      │DISPLAY RATIO DATA│  │
      └──────────────┘      │
            │               │
            ▼               │
   S4 ┌──────────────┐      │
      │RESET RATIO DATA│    │
      └──────────────┘      │
            │◄──────────────┘
            ▼
        ( RETURN )
```

EP 1 775 501 B1

# FIG.6

ENTRY

S11
SHIFT
CHANGE ADVICE
PRESENT
?
— NO

YES

S12 — INCREMENT NUMBER
K1 OF SHIFT CHANGE
ADVICES
(K1←K1+1)

S13
SHIFT
CHANGE ADVICE
OBEYED
?
— NO

YES

S14 — INCREMENT NUMBER
OF TIMES K2 OF SHIFT
CHANGING ACCORDING
TO SHIFT CHANGE
ADVICE
(K2←K2+1)

S16
SHIFT
CHANGE
PERFORMED
?
— NO

YES

S17 — INCREMENT NUMBER
OF TIMES K3 OF SHIFT
CHANGING WITHOUT
SHIFT CHANGE ADVICE
(K3←K3+1)

S15 — CALCULATE AND
STORE RATIO D OF
SHIFT CHANGE ADVICE
OBEDIENCE

RETURN

16

# F I G . 7

11

13

3 ——13a

95% ——13b

12

# FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004060548 A
- EP 1386776 A
- JP 2003019912 A
- DE 10120713 A
- JP 6191312 A
- EP 1498297 A1